Europäisches Patentamt

European Patent Office

Office européen des brevets

(19)

(11) Publication number: **0 141 549**
**A1**

(12) **EUROPEAN PATENT APPLICATION**

(21) Application number: 84306896.6

(22) Date of filing: 10.10.84

(51) Int. Cl.⁴: **C 03 B 37/014**
**C 03 B 37/018, G 02 B 6/10**

(30) Priority: 24.10.83 GB 8328374

(43) Date of publication of application:
15.05.85 Bulletin 85/20

(84) Designated Contracting States:
AT BE CH DE FR IT LI LU NL SE

(71) Applicant: STANDARD TELEPHONES AND CABLES
PUBLIC LIMITED COMPANY
190 Strand
London, WC2R 1DU(GB)

(72) Inventor: Charlton, Roger
7, Briscoe Close
Heddesdon Herts.(GB)

(72) Inventor: Garnham, Cheryl Jane
207 Grove Road
Tiptree Essex. C05 0JB(GB)

(74) Representative: Laurence, Simon French
STC Patent Department Edinburgh Way
Harlow Essex CM20 2SH(GB)

(54) Optical fibre preform manufacture.

(57) In the manufacture of optical fibres the use of chlorine in the range up to 20 volume % has previously been reported for the atmosphere filling the bore of an internally coated glass substrate tube as the bore is collapsed to form an optical fibre preform. The present invention is concerned with the advantages accruing from using chlorine in the range 30 to 75 volume %.

Croydon Printing Company Ltd.

EP 0 141 549 A1

R. Charlton - C.J. Garnham 1-1

EPC

## OPTICAL FIBRE PREFORM MANUFACTURE

This invention relates to the manufacture of glass optical fibre preform, and in particular to preform which has a doped silica core and is made by a process involving the collapse of the bore of a glass tubular precursor of the preform. By the term optical fibre preform is meant a prismatic body of solid cross-section from which optical fibre possessing an internal optical waveguiding structure can be produced by a drawing operation.

One way in which such a tubular precursor is made is by vapour deposition upon the bore of glass substrate tube. The invention finds particular though not necessarily exclusive application in the manufacture of preform for single mode fibre designed to operate at wavelengths in the region of 1.275 to 1.335 microns. For operation within this wavelength range one of the critical parameters determining fibre performance is the level of hydroxyl contamination in the optical core and in the optical cladding of vapour deposited material immediately surrounding that core. Three important sources of hydroxyl contamination during the manufacture of a preform made by this method are, first diffusion from the substrate tube, which may typically contain about 150 ppm hydroxyl; second, hydrogen-containing contaminants of the reagent gases and vapours present in the gas stream employed in the vapour deposition reaction, some of which are liable to become incorporated in the deposit as hydroxyl groups; and finally similar contamination of the atmosphere within the bore of the tube as it is collapsed to form the preform. The effects of the first source of contamination can be ameliorated at least in part by choice of a substrate tube with an initially relatively low moisture content, or by choosing the material and thickness of the deposited optical cladding layer with a view to forming a diffusion barrier layer. The effects of the second and third sources can be ameliorated by the use of dry reagents and by ensuring that there are no leaks in the system to permit the ingress of atmospheric moisture. The second source of contamination, contamination during deposition, is generally less significant than the third source because the deposition reaction usually involves the generation of chlorine gas which reacts strongly with any residual hydroxyl groups to evolve hydrogen chloride vapour which is swept out in the system exhaust. In practice, therefore, the most significant source of hydroxyl contamination is the collapse process. Work has been reported in which chlorine gas has been added to the collapse atmosphere. This has been reported for instance by B.J. Ainslie et al in the article entitled 'Optimised Structure for Preparing Long Ultra-Low-Loss Single-Mode Fibres' appearing in Electronics Letters 28th August, 1980 Vol.16 No.18 pp 692-3. Similar mention is made by J. Irven et al in the article entitled 'Long Wavelength Performance of Optical Fibres Co-Doped with Fluorine' appearing in Electronics Letters 8th January, 1981 Vol. 17 No. 1 pp 3-5. In a further paper entitled 'The Design and Fabrication of Monomode Optical Fiber', IEEE Journal of Quantum Electronics Vol. QE-18 No. 4 pp 91-99, J. Ainslie et al, when referring to their earlier paper, make it clear that the chlorine represented 10% of a chlorine/ oxygen mixture. In yet another paper, entitled 'Reduction of Hydroxyl Contamination in Optical Fiber Preforms' given at the 3rd International Optics and Optical Fiber Communications San Francisco 1981 pp86-88 K.L. Walker et al describe how 3 to 10% chlorine is present in the deposition atmosphere due to the oxidation of silicon tetrachloride and germanium tetrachloride, and refer to a resulting reduction in the actual level of hydroxyl contamination by a factor in the region of 4000. Then these authors go on to describe using a 80% oxygen 20% chlorine atmosphere for collapse.

The present invention is concerned with using a significantly higher proportion of chlorine in the collapse atmosphere than has previously been reported.

According to the present invention there is provided a method of manufacturing glass optical fibre preform having a solid cross-section with a doped silica core, which method includes the step of collapsing the bore of a glass tubular precursor of the preform to form the preform, during which collapse the bore is exposed to a dry atmosphere substantially devoid of hydrogen and its compounds, characterised in that the atmosphere is an atmosphere of chlorine and oxygen containing not more than 10 volume % of other constituents and containing chlorine in the range 30 to 75 volume %.

There follows a description of the manufacture of a series of optical fibre preforms made under substantially identical conditions in the collapse atmosphere. The attenuation of fibres drawn from these preforms is then compared and related to the amount of chlorine in the collapse atmosphere. The description refers to the accompanying tables and drawings in which:

Figure 1 depicts the general form of a typical spectral absorption characteristic of a single mode fibre, with optical attenuation plotted as a function of wavelength,

Figure 2 depicts the same characteristic replotted with optical attenuation plotted as a function of the inverse fourth power of wavelength,

Figures 3 and 4 depict the relationship between excess hydroxyl attenuation, at 1.31 and 1.325 microns respectively, and peak hydroxyl attenuation at 1.385 microns,

0141549

Figure 5 depicts the relationship between peak hydroxyl attenuation at 1.385 microns and chlorine concentration in an oxygen-chlorine collapse atmosphere,

Figure 6 depicts the relationship between wavelength independent (infinity intercept) absorption and chlorine concentration in an oxygen-chlorine collapse atmosphere, and

Figure 7 depicts the relationship between excess attenuation and chlorine concentration in an oxygen-chlorine collapse atmosphere.

The members of this series of optical fibre preforms were made with automated equipment using a hydrogen-free thermally induced direct oxidation reaction to deposit glass on the bore of a silica substrate tube which was then collapsed to form the preform. These preforms were for making single mode fibre with vapour deposited optical cladding material having a refractive index matching that of the silica substrate tube, a mode field radius of 5.25 microns, a zero dispersion wavelength of 1.31 microns, and a higher order modes cut-off wavelength of 1.2 microns.

The substrate tube used were Heralux WG natural quartz tubes of 2mm wall thickness and 20mm external diameter. The initial deposit of material for the optical cladding was silica doped with germania, phosphorus pentoxide and fluorine, while that for the core was silica doped with germania. The deposition temperature was controlled to within $\pm$ 3$^{\circ}$C of the set point of around 1750$^{\circ}$C.

Each coated tube was collapsed at 2050$^{\circ}$C to produce a 13mm nominal diameter preform using two longitudinal traverses of an oxyhydrogen burner whose flame temperature was held constant by means of flame feedback control equipment. Fibres approximately 5km long and 125 microns in diameter were then drawn from the preforms using a vertical pulling tower with a graphite resistance furnace. These fibres were on-line coated with a thermally cured silicone elastomer.

**0141549**

Details of the collapse atmosphere used in the production of these preforms are related to the attenuation of fibres drawn from the preforms in the following tables.

TABLE 1

| Chlorine Concentration Volume % | OH Peak Absorption at 1.385 microns dB/km | Infinity Intercept dB/km |
|---|---|---|
| 30 | 1.63 | 0.03 |
| 30 | 2.03 | 0.11 |
| 10 | 3.11 | 0.04 |
| 20 | 1.79 | 0.06 |
| 34 | 1.19 | 0.07 |
| 100 | 0.47 | 0.25 |
| 100 | 0.35 | 0.23 |
| 38 | 1.06 | 1.06 |
| 80 | 0.62 | 0.04 |
| 90 | 0.58 | 0.39 |
| 95 | 0.39 | 0.36 |
| 80 | 0.56 | 0.26 |
| 80 | 0.62 | 0.09 |
| 80 | 0.63 | 0.31 |
| 74 | 0.86 | 0.15 |
| 60 | 1.15 | 0.04 |

0141549

## TABLE 2

| No. of Preforms | Chlorine Concentration Volume % | Mean maximum Attenuation in range 1.275-1.335 microns dB/km | Mean OH Peak Absorption at 1.385 microns dB/km | Infinity Intercept dB/km |
|---|---|---|---|---|
| 5 | 60 | 0.44 | 0.72 | 0.06 |
| 10 | 40 | 0.46 | 1.28 | < 0.05 |
| 12 | 40 | 0.51 | 1.42 | < 0.05 |
| 11 | 29 | 0.60 | 4.28 | < 0.05 |
| 10 | 36 | 0.48 | 2.54 | < 0.05 |
| 9 | 35 | 0.47 | 2.11 | < 0.05 |
| 6 | 35 | 0.54 | 2.11 | < 0.05 |

0141549

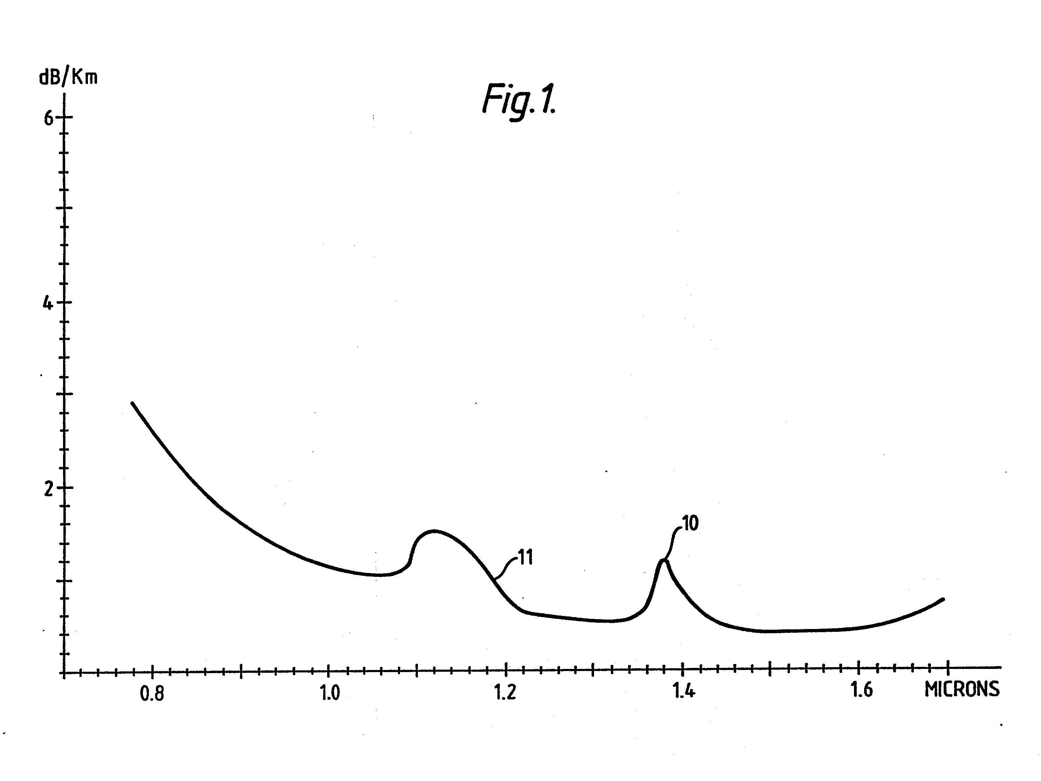

Figure 1 depicts the general shape of a plot showing how the optical attenuation of these single mode fibres varies as a function of wavelength. At the long wavelength end of such a spectral characteristic there is a steadily increasing attenuation at wavelengths longer than about 1.6 microns due to phonon effects, while at the short wavelength end the increase is due to the effects of Rayleigh scattering. Superimposed on this is a hydroxyl absorption peak 10 in the region of 1.38 to 1.4 microns and, in the region of 1.2 microns, an attenuation increase 11 as the wavelength is reduced, that is associated with the cutting-on of higher order modes. (Associated with the hydroxyl peak 10 is a smaller secondary peak (not shown) lying at about 1.24 to 1.26 microns which is clearly evident when the value of the hydroxyl peak 10 is 5 dB/km or more, but is not resolved for smaller values of 2 dB/km or less.)

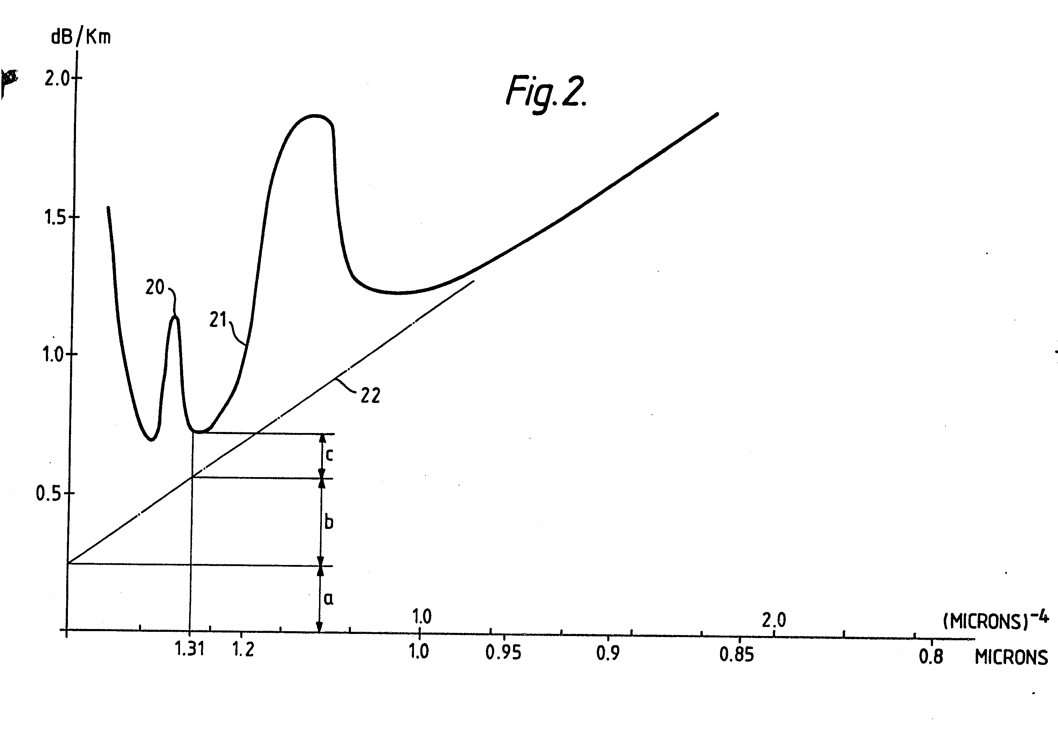

In Figure 2, the spectral absorption characteristic of Figure 1, is replotted with the attenuation being plotted against the inverse fourth power of wavelength in order to show more clearly the effects of Rayleigh scattering. From Figure 2 it is seen that the attenuation at a wavelength lying between the hydroxyl peak 20 and the wavelength cut-off of higher order modes 21, say for example a wavelength of 1.31 microns, is the sum of three components 'a', 'b' and 'c'. Component 'a' is a wavelength independent contribution whose magnitude is given by the intercept of a straight line 22 characterising the Rayleigh inverse fourth power low attenuation. Component 'b' is the contribution of the Rayleigh scattering at the selected wavelength, and is equal to the product of the gradient of the Rayleigh line 22 with the inverse fourth power of the selected wavelength. The final contribution is given by component 'c', which is the additional loss provided by the tail to shorter wavelengths of the hydroxyl peak 20.

For any particular fibre some difficulty is

- 8 -                    **0141549**

encountered in ascribing the correct Rayleigh line 20 for its particular spectral characteristic, and this makes it difficult to be certain of ascribing the appropriate value for component 'c', the hydroxyl component.

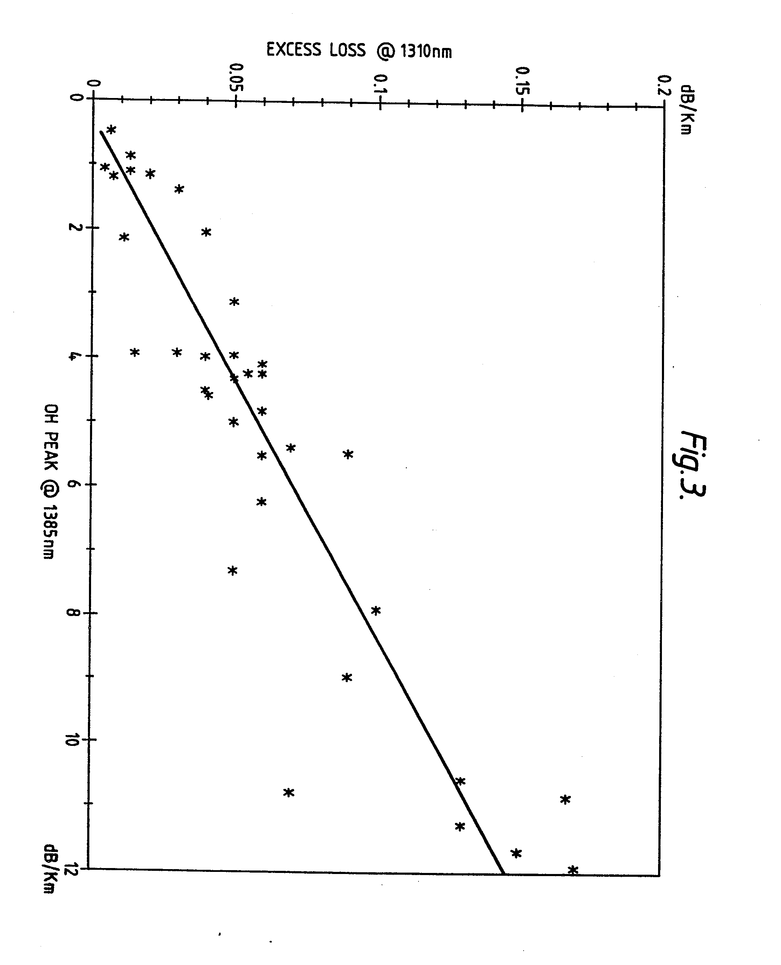

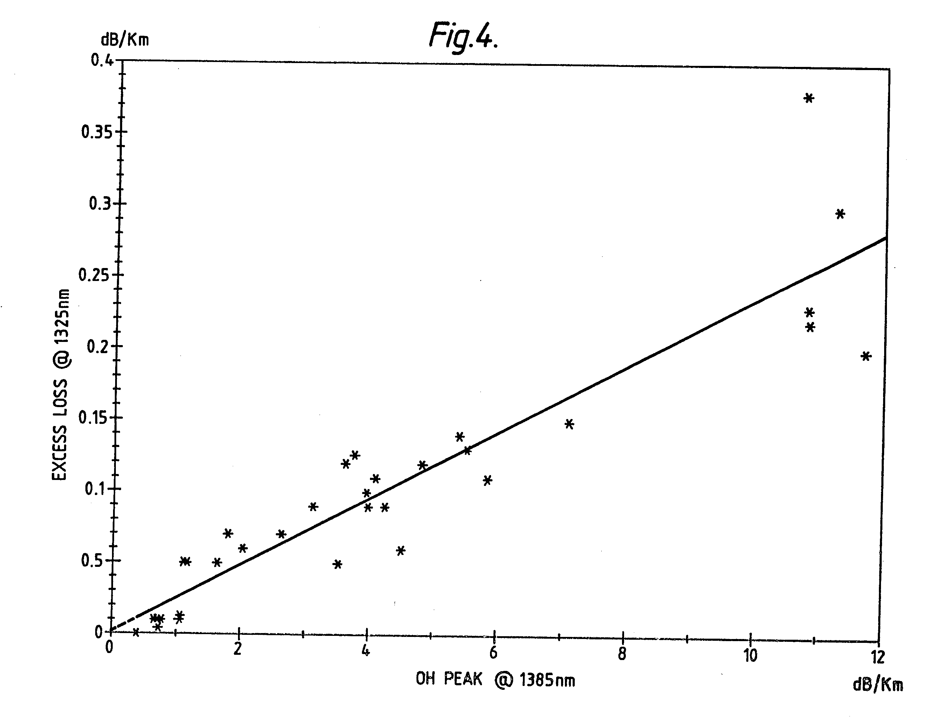

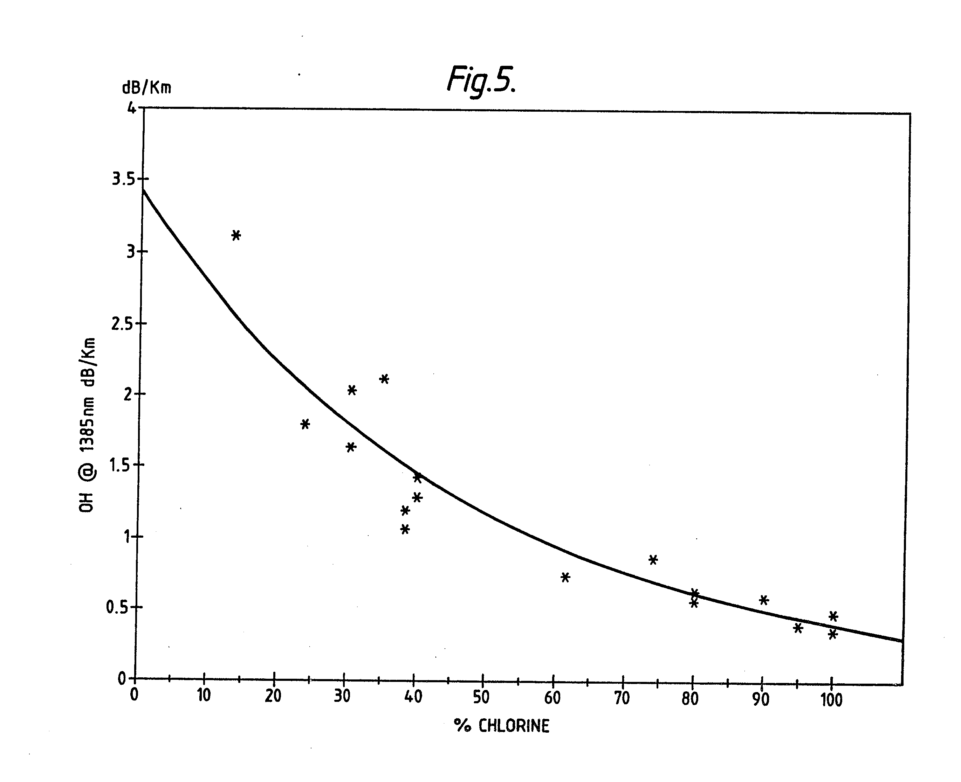

However, on the basis of a large number of samples a correlation has been found between the magnitude of the hydroxyl peak 20 and the value of the hydroxyl component 'c' at two specific wavelengths. This correlation is depicted graphically in Figures 3 and 4. For this reason, in assessing the effect of the chlorine in the collapse atmosphere, the quoted figures for the hydroxyl component 'c' are figures derived from measurement of the hydroxyl absorption peaks 20. In general the results show a substantially exponential decrease in the magnitude of the hydroxyl component 'c' with increasing concentration of chlorine. This is shown in Figure 5.

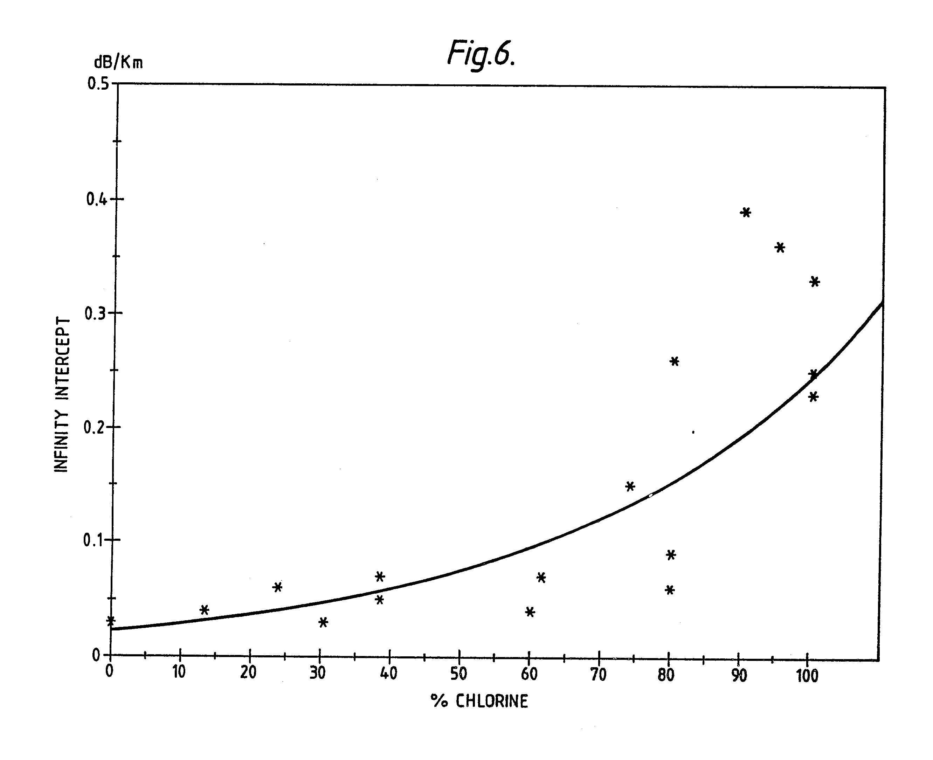

Component 'b', the Rayleigh scattering component, is found to vary from sample to sample in a manner depending primarily upon refractive index, and no correlation was found between the magnitude of this component and the concentration of chlorine in the collapse atmosphere. On the other hand component 'a', the wavelength independent component, otherwise known as infinity intercept, has been found to remain at not more than about 0.05 dB/km for collapse atmosphere containing up to about 50%, and then to rise substantially exponentially thereafter as depicted in Figure 6.

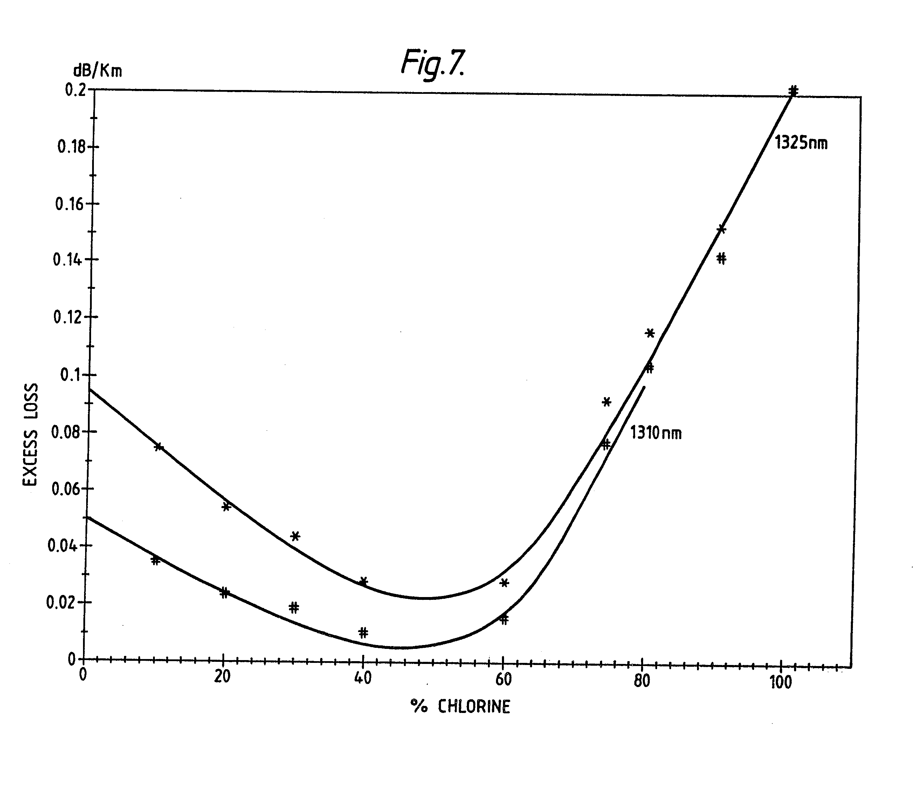

On the basis of these results the effects of varying the concentration of chlorine in the collapse atmosphere are represented in Figure 7 by summing only the hydroxyl component 'c', and the value by which infinity intercept component 'a' exceeds 0.05 dB/km. From this Figure it is seen that the 'window' of optimum chlorine concentration is narrowed on the low chlorine concentration side when moving to a longer wavelength of operation closer to the hydroxyl absorption peak. Thus there is provided according to the present invention a

0141549

preferred range of chlorine concentration of 30 to 75 volume %, and within this broad range a particularly advantageous range of 40 to 60%.

In a further series of tests in which the oxygen in the collapse atmosphere was replaced with helium it was again found that increasing the proportion of chlorine produced a substantially exponential increase in the magnitude of the infinity intercept. In this instance however, the effect is much more pronounced at much lower chlorine concentrations. Hence it is believed that the collapse atmosphere should not contain more than 10% of constituents other than oxygen and chlorine, and preferably should contain oxygen and chlorine exclusively.

- 10 -                    0141549

CLAIMS :

1.        A method of manufacturing glass optical fibre preform having a solid cross-section with a doped silica core, which method includes the step of collapsing the bore of a glass tubular precursor of the preform to form the preform, during which collapse the bore is exposed to a dry atmosphere substantially devoid of hydrogen and its compounds, characterised in that the atmosphere is an atmosphere of chlorine and oxygen containing not more than 10 volume % of other constituents and containing chlorine in the range 30 to 75 volume %.

2.        A method as claimed in claim 1, wherein said atmosphere contains chlorine in the range 40 to 60 volume %.

3.        A method as claimed in claim 1 or 2, wherein said atmosphere consists of chlorine and oxygen exclusively.

4.        A method as claimed in any preceding claim, wherein the tubular precursor is formed by using a vapour reaction from which hydrogen and its compounds are excluded to deposit layers of glass upon the bore of a glass substrate tube.

5.        An optical fibre drawn from an optical fibre preform made by the method claimed in any one of the preceding claims.

*Fig.1.*

Fig.2.

Fig.3.

Fig.4.

0141549

Fig.5.

Fig.6.

Fig.7.

0141549

))) European Patent Office

**EUROPEAN SEARCH REPORT**

## DOCUMENTS CONSIDERED TO BE RELEVANT

EP 84306896.6

| Category | Citation of document with indication, where appropriate, of relevant passages | Relevant to claim | CLASSIFICATION OF THE APPLICATION (Int. Cl.4) |
|---|---|---|---|
| X | US - A - 4 304 583 (ARONSON)  <br> * Abstract; claims 1,2; column 4, lines 3-25 * <br> -- | 1,4,5 | C 03 B 37/014 <br> C 03 B 37/018 <br> G 02 B 6/10 |
| A | US - A - 4 317 668 (SUSA) <br> * Abstract; column 1, lines 5-11; claims 1,5 * <br> ---- | 1-3,5 | |

| TECHNICAL FIELDS SEARCHED (Int. Cl.4) |
|---|
| C 03 B <br> G 02 B |

The present search report has been drawn up for all claims

| Place of search | Date of completion of the search | Examiner |
|---|---|---|
| VIENNA | 21-01-1985 | HAUSWIRTH |

EPO Form 1503 03 82